# EUROPÄISCHE PATENTANMELDUNG

(11) **EP 1 217 631 A2**
(43) Veröffentlichungstag der Anmeldung: **26.06.2002**
(21) Anmeldenummer: 01130025.8
(22) Anmeldetag: 18.12.2001
(51) Int. Cl.: G12B 11/02, G01D 11/28

(54) **Zifferblatt**

(30) Priorität: 22.12.2000 DE 10064759
(71) Anmelder: SIEMENS AKTIENGESELLSCHAFT, 80333 München (DE)
(72) Erfinder: Kneer, Bernward, 63791 Karlstein (DE); Kopsieker, Ingo, 63500 Seligenstadt (DE)

(57) **Zusammenfassung**

In der Anmeldung wird ein Zifferblatt für ein Anzeigeninstrument, insbesondere in einem Kraftfahrzeug, dargestellt. Diese Zifferblatt besteht aus einem lichtleitenden Grundkörper, dessen Außenseite als zweistufiger Kegel ausgeformt ist. Die Außenseite wird bis auf Symbole bildende Lichtdurchlässe (10) von einer lichtundurchlässigen Schicht (9) überdeckt. Wobei das Licht, das zuvor in den Grundkörper (2) eingekoppelt worden ist, dort austritt. Die Besonderheit besteht darin, dass der Grundkörper (2) im Spritzgussverfahren hergestellt ist, was es ermöglicht, eine nicht ebene Außenfläche zu erzeugen, wobei die lichtundurchlässige Schicht (9) auf der Außenfläche selbst erzeugt ist.

## Beschreibung

Die Erfindung bezieht sich auf ein Zifferblatt für ein Anzeigeinstrument, insbesondere in einem Kraftfahrzeug, mit einem Lichtleiter als Grundkörper an dessen dem Betrachter zugewandten Außenseite Symbole dargestellt sind, wozu sich eine im wesentlichen lichtdurchlässige Schicht an der Außenseite befindet. Die mit die Symbole bildenden Lichtdurchlässen versehen ist. Die genannte Schicht ist dabei im wesentlichen lichtundurchlässig, weil sich eine vollständige Lichundurchlässigkeit technisch nur mit sehr hohem Aufwand, der in einer Großserienproduktion wirtschaftlich nicht vertretbar ist, verwirklichen ließe. Wichtig ist, dass die lichtundurchlässige Schicht und die die Symbole bildenden Lichtdurchlässe einen hohen Kontrast aufweisen. Im Allgemeinen wir der Grundkörper aus einem lichtleitenden Werkstoff, z. B. aus Polycarbonat oder PMMA, hergestellt. Die Außenseite ist flach, so dass eine zuvor hergestellte Folie, die im Allgemeinen lichtundurchlässig ist aber mit die Symbole bildenden Lichtdurchlässen versehen ist, auf die glatte Oberfläche aufgeklebt werden kann.
Bei dieser Methode ergeben sich mehrer Nachteile. Zum einen ist die gestalterische Möglichkeit eingegrenzt: Die Folie kann nämlich letztlich nur auf eine flache Oberfläche geklebt werden. Zum Anderen ist das Herstellungsverfahren relativ aufwendig, da die lichtundurchlässige Schicht gesondert als Folie z. B. im Siebdruckverfahren hergestellt werden muss. Ein weiterer Nachteil besteht somit darin, dass zwei Bauteile unabhängig voneinander hergestellt und logistisch gesteuert werden müssen.

Die Erfindung beruht auf dem Problem, ein Zifferblatt für ein Anzeigeinstrument zu schaffen, das die vorgenannten Nachteile überwindet. Dazu wird vorgeschlagen, dass der Grundkörper im Spritzgussverfahren hergestellt ist und die Außenseite gegeneinander geneigte Flächenbereiche mit den Lichtdurchlässen aufweist.

Mit diesen Merkmalen wir zunächst die Grenze der gestalterischen Möglichkeiten aufgehoben. Symbole können je nach ihrem Bedeutungsgehalt auf unterschiedlich geneigten Flächen ausgebildet werden, so dass das Anzeigeinstrument insgesamt besser abzulesen ist. Aus dem Stand der Technik sind zwar Grundkörper für Anzeigeinstrumente mit Lichtdurchlässen bekannt, bei denen der Grundkörper aber nicht als Lichtleiter dient. Außerdem wirken die Lichtdurchlässe lediglich als Lichtquellen, die die Außenseiten des Grundkörpers, die das Zifferblett tragen, beleuchtet.

Eine besonders geeignete Form, die gegeneinander geneigten Flächenbereiche auszubilden, besteht darin, einen innenliegenden Ringbereich und einen weiter Außen liegenden Ringbereich zu gestalten, deren Außenflächen jewils Kegelflächen bilden, die gegeneinander geneigt sind. So kann z.B. die Kegelfläche des äußeren Ringbereiches steiler sein als die des inneren Ringbereiches. Bei dieser Ausgestaltung kann z. B. auf den innenliegenden Ringbereich die Skala für Geschwindigkeitsanzeige aufgebracht werden, während im äußeren Ringbereich weitere Markierungen vorhanden sind.

Besonders prägnant treten die Symbole - d.h. vor Allem die Ziffern einer Geschwindigkeits -oder Drehzahlanzeige- hervor, wenn diese auf erhabenen Flächen von Erhebungen ausgebildet sind, deren Flanken lichtundurchlässig sind. Damit ergibt sich der Eindruck, als würden die Ziffern vor der Grundfläche schweben, was eine besonders ästhetische Gestaltung ermöglicht.

Ein weiterer Vorteil der Erfindung liegt dann vor, wenn die lichtundurchlässige Schicht auf der Außenfläche erzeugt ist. Dies bedeutet, dass die Schicht nicht zuvor in einem gesonderten Produktionsgang z. B. als Klebefolie produziert wird, sondern unmittelbar durch Auftragen eines Lichtdurchlässigen Werkstoffs auf dem Grundkörper erzeugt ist. Die Schicht entsteht somit erst auf dem Grundkörper. Beide Verfahren, eine solche Schicht aufzubringen, sind zur Genüge bekannt z. B. kann daran gedacht werden, einen Lack in flüssiger Form aufzubringen oder als Nebel aufzusprühen.

Zur Erzeugung der Lichtdurchlässe kann dabei entweder zuvor eine Schablone aufgebracht werden, die nach dem Aufbringen der lichtdurchlässigen Schicht entfernt wird. Eine andere Möglichkeit besteht darin, die Lichtdurchlässe durch Entfernen, z. B. durch thermisches oder mechanisches Bearbeiten, der Schicht in den entsprechenden Bereichen erzeugen.

Letztlich spielt die Art der Erzeugung der lichtdurchlässigen Schicht sowie die Herstellung des Grundkörpers im Spritzgussverfahren zusammen. Durch die Anwendung beider Merkmale lässt sich eine vielgestaltige Struktur des Zifferblattes erreichen. Die Darstellungsmöglichkeiten sind wesentlich vielfältiger als bei dem im Stand der Technik erwähnten Verfahren.

Zum Einkoppeln des Lichtes in den Grundkörper wir dieser aus der Scheibe, vorzugsweise einer Lochscheibe, gebildet, an deren Außenfläche die Symbole ausgebildet sind, und aus einem senkrecht dazu verlaufenden Ring, wobei an der freien Unterkante des Rings das Licht aus einer Lichtquelle, z. B. einer Leuchtdiode, eingekoppelt wird. Vorteilhaft über eine Reflexionsfläche im Übergang zwischen Scheibe und Ring wird das Licht in die Scheibe gelenkt und tritt durch die Lichtdurchlässe nach außen.

Eine vorteilhaft besonders hohe Lichtausbeute und helle Erleuchtung der Symbole ergibt sich, wenn die den Symbolen gegenüberliegende Seite des Grundkörpers lichtstreuend ausgebildet ist.

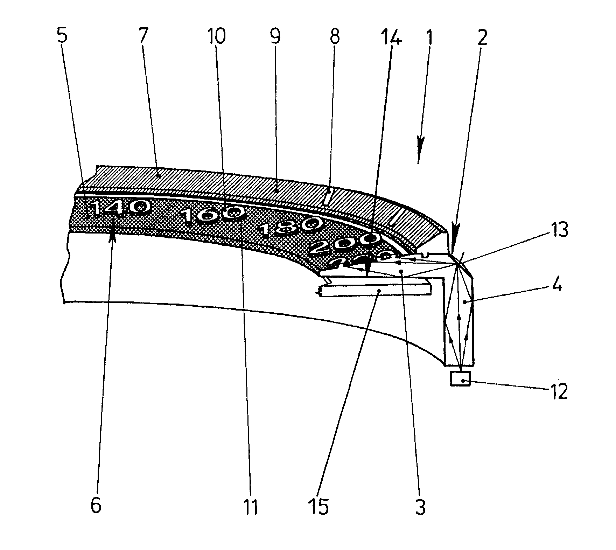

Im Folgenden wird anhand eines Ausführungsbeispiels, dargestellt in einer einzigen Figur, die Erfindung näher erläutert.

In der Figur ist in perspektivischerer Darstellung ein Viertel eines ringförmigen Ziffernblattes dargestellt, wobei das eine Ende der Darstellung im Schnitt gezeigt ist.

Das Zifferblatt 1, das Bestandteil eines hier nicht weiter dargestellten Anzeigeinstrumentes eines Kraftfahrzeuges ist, besteht aus einem Grundkörper 2, der wiederum aus einer Scheibe 3 und aus einem senkrecht dazu verlaufenden Ring 4 besteht. Es ergibt sich ein Aufbau, der im Schnitt L-förmig ist und damit eine ausreichende Stabilität aufweist. Der Grundkörper 2 wird im Spritzgussverfahren aus einem lichtdurchlässigen Werkstoff, z. B. Polycarbonat oder PMMA, hergestellt, wobei der Grundkörper 2 beispielsweise auch beliebig eingefärbt sein kann.

Die Außenseite der Scheibe 3 besteht aus einer zweistufigen Kegelfläche, die zum Zentrum des Grünkörpers 2 hin geneigt ist. Dabei ist ein innenliegender Ringbereich 5 vorgesehen, auf dem die Ziffer 6 einer Geschwindigkeitsanzeige aufgebracht sind, und ein deutlich steiler verlaufender außen liegender Ringbereich 7 mit Markierungen 8. Der Teil des Grundkörpers 2, der den außenliegenden Ringbereich 7 aufweißt, kann als gesonderter Teil des Grundkörpers 2 ausgeführt werden, der mit dem Rest zur Bildung des Gesamtgrundkörpers zusammengesteckt wird.

Die Außenseiten der beiden Ringbereiche 5,7 sind mit einer undurchlässigen Schicht 9 überzogen, die z. B. auflackiert worden ist. Dies undurchlässige Schicht 9 weißt Lichtdurchlässe 10 auf, die die Symbole, z. B. die Ziffern 6 und die Markierung 8 bilden. Die Lichtdurchlässe 10 werden erzeugt, indem die zuvor durchgängig aufgebrachte undurchlässige Schicht 9 in den Lichtdurchlässen 10 wieder entfernt wird.

Die Lichtdurchlässe 10, die die Ziffern 6 bilden, sind auf Erhebungen 11 in der Form der Ziffern ausgebildet, wobei der lichtdurchlässige Bereich an der erhabenen Fläche ausgebildet ist, während die Flanke der Erhebungen 11 jeweils lichtundurchlässig sind.

An der unteren freien Kante des Rings 4 befindet sich eine oder mehrer LED 12. Durch die untere Eintrittsfläche am Ring 4 tritt das Licht in den Grundkörper 2 ein und wird über eine Reflexionsfläche 13 seitlich in die Scheibe 3 eingekoppelt, wo es durch die Lichtdurchlässe 10 nach außen tritt und die Symbole, d.h. Ziffern 6 und Markierungen 8 als leuchtende Flächen gegenüber der lichtundurchlässigen Beschichtung 9 erkennbar werden. Eine den Symbolen gegenüberliegende Seite 14 des Grundkörpers 2 ist diffus lichtstreuend ausgebildet, wodurch eine Lichtumlenkung in Richtung der Symbole erfolgt.

Eine lichtreflektierende, beispielsweise aus einem weißen Kunststoff gebildete Wand 15 in dem Anzeigeninstrument sorgt dafür, dass die Lichtausbeute - trotz nicht zu vermeidender Lichtverluste aus dem Grundkörper 2 - hoch ist.

## Patentansprüche

1. Zifferblatt für ein Anzeigeninstrument, insbesondere in einem Kraftfahrzeug, mit dem Lichtleiter als Grundkörper, an dessen dem Betrachter zugewandten Außenseite Symbole dargestellt sind , wozu sich eine im wesentlichen lichtundurchlässige Schicht an der Außenseite befindet, die mit die Symbole bildenden Lichtdurchlässen versehen ist, **dadurch gekennzeichnet,** das der Grundkörper(2) im Spritzgussverfahren hergestellt ist und die Außenseite gegeneinander geneigte Flächenbereiche (5,7) mit den Lichtdurchlässen (10) aufweist.

2. Zifferblatt nach Anspruch 1, **dadurch gekennzeichnet, dass** der Grundkörper (2) einen innenliegenden Ringbereich (5) und einen weiter außen liegenden Ringbereich (7) aufweist, deren Außenseiten jeweils von einer Kegelfläche gebildet sind, wobei die Kegelfläche des außen liegenden Ringbereiches (7) steiler ist als die des innen liegenden Ringbereiches (5).

3. Zifferblatt nach Anspruch 1 oder 4, **dadurch gekennzeichnet, dass** die Symbole von erhabenen Bereichen der Außenfläche gebildet sind, wobei die Lichtdurchlässe (10) auf der Oberseite der Erhebung (11) vorhanden sind.

4. Zifferblatt nach einem der vorhergehenden Ansprüche **dadurch gekennzeichnet, dass** die lichtundurchlässige Schicht (9) auf der Außenfläche des Grundkörpers (2) erzeugt ist.

5. Zifferblatt nach Anspruch 4, **dadurch gekennzeichnet, dass** die lichtundurchlässige Schicht (9) mit einem Lackierungsverfahren aufgebracht ist.

6. Zifferblatt nach Anspruch 4 und 5, **dadurch gekennzeichnet, dass** die Lichtdurchlässe (10) durch eine partielle Entfernung der lichtundurchlässigen Schicht (9) erzeugt sind.

7. Zifferblatt nach einem der vorhergehenden Ansprüche **dadurch gekennzeichnet, dass** der Grundkörper (2) an seiner Unterseite mit einem lichtleitendem Ring (4) versehen ist, der senkrecht zu einer die beschichtete Außenfläche tragenden Scheibe (3) ausgerichtet ist, wobei das Licht in die freie Kante des Rings (4) eingekoppelt ist.

8. Zifferblatt nach Anspruch 7, **dadurch gekennzeichnet, dass** im Übergang zwischen dem Ring (4) und der Scheibe (3) eine Reflexionsfläche (13) ausgebildet ist.

9. Ziffernblatt nach einem der vorhergehenden Ansprüche, **dadurch gekennzeichnet, dass** die den Symbolen gegenüberliegende Seite des Grundkörpers (2) lichtstreuend ausgebildet ist.
